# EUROPEAN PATENT APPLICATION

(11) **EP 1 980 487 A1**
(43) Date of publication of application: **15.10.2008**
(21) Application number: 07105972.9
(22) Date of filing: 11.04.2007
(51) Int. Cl.: B64D 11/00, H04B 7/208, H04N 7/20

(54) **Aeronautical satellite TV repeater**

(71) Applicant: EMS Technologies Canada, Ltd., Ottawa, Ontario K2C OP9 (CA)
(72) Inventor: Hebb, Gary, Ottawa, Ontario K1Y 0J5 (CA); Strickland, Peter, Ottawa, Ontario K2A 1X8 (CA)
(74) Representative: Molnia, David

(57) **Abstract**

A repeater for digital satellite television broadcasts wherein the repeater receives digital television signals broadcast from a satellite using one or more antennas mounted on the outside of an aircraft; the repeater corrects for Doppler frequency offset, resulting from the aircraft and/or satellite motion, prior to re-transtnission of the broadcast into the interior of the airframe. This correction is a shift of the received signal frequency; the repeater re-transmits the broadcast, in a modulated and coded format, into the inside of an aircraft, the re-transmitted signal is received by multiple users inside the aircraft; the repeated signal is in a modulated and/or coded form and consequently the multiple users of the signal must each have a receiver capable of performing the required demodulation and/or decoding.

## Description

### 1. Background of the Invention

Aircraft have been receiving television signals transmitted from satellites for over a decade and such systems have become common and popular. These systems are very costly however and the invention described here provides a means of implementing much lower cost aeronautical satellite TV systems. In addition this invention provides a means of utilizing terrestrial hand-held and portable video receivers while on an aircraft. Such receivers are otherwise useless in an aircraft since the aircraft blocks the signals transmitted and is typically out of range of the terrestrial digital video networks.

Conventional aeronautical satellite tv systems use large steered antennas on the outside of the aircraft to receive signals that are intended for receivers in homes on the ground. In 2007 these home tv receivers are popular around the world and typically the antennas used to receive the signals are roughly 18" - 20" in diameter and attached to the sides of homes in an orientation required to receive signals from geostationary satellites. The aeronautical version of these systems typically uses a 12" diameter antenna, or a 6" by 30" antenna, either of which must be constantly steered by motors and control electronics to be pointed towards the satellite of interest as the aircraft maneuvers.

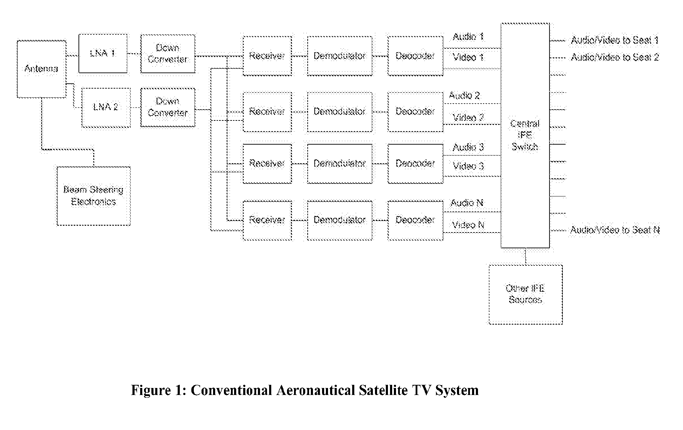

A block diagram of a conventional aeronautical satellite tv system is shown in Figure 1. In this conventional implementation all demodulation and decoding of the signals is performed at a central location on the aircraft. The signal received by an individual user at the seat-back is selected from those available in the central location by a central IFE (In Flight Entertainment) switch. The signal may be transmitted to the seat back by optical fiber, coaxial cable or other means. The electronics on each seat back is minimized in this manner since all that is required is the ability to display the video and reproduce the audio that are sent to the seat back. The central IFE switch receives a command from the user at the seat back which tells the switch which television channel or other IFE source (games, dvd, radio, cd etc) that the user at that seat is to be sent.

The conventional system starts at the antenna which is either a reflector or phased array which must have its beam directed towards the satellite of interest. Since the aircraft is in motion the orientation of the antenna (in a mechanically steered system) must be constantly changed to keep the beam on the satellite. Systems receiving from multiple satellites using multiple beams have been envisaged. Some systems use phase scanned arrays that have phase shifters to steer the beam without mechanically moving the antenna. Most systems use the mechanically steered antenna however since this design provides much better coverage - typically in the form of improved performance when the satellite is close to the horizon as viewed from the aircraft. This is the case for geostationary satellites when the aircraft is in the important north Atlantic or north Pacific routes. Steering of the antenna beam involves some combination of searching for the satellite (by scanning the beam through some search pattern), computation of the relative satellite position using aircraft and/or local navigation inputs and sensors, and tracking of the satellite using dither or monopulse techniques.

The satellites generally have signals of interest in two polarizations. These polarizations are vertical and horizontal (at the satellite) or RHCP and LHCP depending on the satellite used. The antenna thus has two outputs corresponding to the two polarizations and often some means of switching between the circular polarized and linearly polarized modes. In linearly polarized mode the polarizations must be rotated to the local polarizations as viewed by the aircraft antenna. This requires further electronics and generally computation of the incident polarization from geometric and navigation inputs.

The two polarizations are typically amplified and down-converted to L-band. Most of the current implementations have satellite transmissions in Ku-band and the receivers are designed to accept an L-band intermediate frequency. Different regions use slightly different IF frequencies and more than one down-converter channel may be required for each polarization.

Key to the conventional implementation is the use of multiple centrally located IRDs (Integrated Receiver Decoder units). Each IRD performs the receiving, demodulation and decoding of one or more television channels. In order to provide the users with a large number of channels the system requires multiple centrally located IRDs. Typically these would be in one equipment rack or box. The decoded tv channels are then all connected into a large centrally located switch. Each user sends a signal to the switch indicating which channel (or other IFE source) they would like to receive. The switch connects that source to the transmission path to the user's seat-back.

The invention described here is a new, lower cost, and more compact, aeronautical satellite television system. It will allow satellite TV to become universally available on aircraft of all sizes. On large aircraft the cost, weight, and complexity, of signal distribution to the users is also much lower with this new design.

### 2. Description of the Invention

### 2.1 Simple Repeater

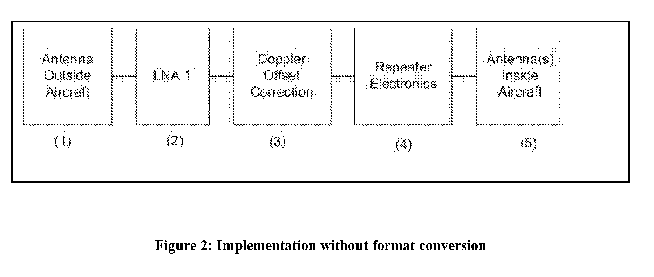

The simplest implementation of the proposed invention is shown in Figure 2. In this simple configuration an antenna (1) on the outside of the aircraft receives a satellite video broadcast. This is then amplified by Low Noise Amplifier (2). The Doppler offset resulting from the relative motion of the aircraft relative to the satellite is eliminated by block (3). The repeater electronics (4) amplifies the signal and may incorporate electronics to control signal level, eliminate feedback and perform other monitoring, control, source selection, and content selection functions. The amplified signal is then retransmitted into the cabin interior by one or more antennas inside the aircraft (5). Either the repeater electronics (4) or the Doppler correction block (3) may, or may not, incorporate a frequency offset such that the signal frequency transmitted inside the aircraft is different from that transmitted by the satellite by some fixed amount. This offset could simply match the re-transmitted frequency to that expected by the user's receivers and/or provide a means of eliminating feedback-related oscillation in the chance that the signal transmitted inside the aircraft is picked up again by the antenna outside the aircraft. This fixed offset may be within the acquisition range of standard receivers or may alternatively be a full channel offset. In some configurations this offset may be into an entirely different frequency band for example the offset may be from a satellite S-band allocation to a terrestrial L-band or UHF allocation.

In this invention each user separately recovers the signal from the complex modulated and coded format transmitted within the airframe. While this may sound inefficient it is believed that the receivers required for this signal recovery will become very common in the future such that many, or most, users will have hardware with this capability. For example cell phones, pda's, computers and other devices may have this capability or may have simple plug-in devices and/or downloads to add this capability. For users not owning such a receiver the aircraft may be equipped with such or receivers may be made available by some means. Such receivers are expected to be sufficiently compact and inexpensive in the future that they may be built-into the aircraft - for example into seatbacks.
(1) Antenna on the Outside of the Aircraft
   This antenna serves the purpose of receiving the signal broadcast by the satellite. Satellite transmissions in the DVB-SH and S-DMB formats can be received by low gain omni-directional antennas. In this case the antenna (1) need not incorporate any beam steering, resulting in a very low cost system implementation. In some cases however it may be desirable to use a higher-gain antenna and steer this antenna's beam towards the satellite. For example this higher-gain antenna could allow the signal to be received outside the normal coverage region of the service in question. Alternatively the higher gain could be used to provide additional system margin or accommodate aircraft roll that would otherwise reduce the gain in the direction of the satellite. Some services may also be transmitted at a lower power level from the satellite thus requiring a higher gain antenna on the aircraft. For example if a DVB-SH or S-DMB signal were transferred to a global coverage satellite beam then the power density at the aircraft would be quite low demanding a higher antenna gain at the aircraft. In the case of a higher-gain antenna the beam may be steered either by motors, that mechanically rotate some portion of the antenna structure (such as a radiator, reflector or lens), or by phase shifters that scan the beam without requiring any antenna motion. The motors and/or phase shifters are controlled by beam steering electronics that may utilize inputs from the aircraft navigation electronics and may also have integral acceleration and orientation sensors. The beam position can be determined from computation using knowledge of the geometry and any combination of search, dither, or monopulse techniques.
(2) The Low Noise Amplifier (LNA) amplifies the signal level for use by later electronics without adding excessive noise. Using 2007 technology PHEMT devices are one option for implementation.
(3) Doppler Offset Correction
   The Doppler offset resulting from the aircraft motion relative to the satellite can be much larger than that which can be accommodated by S-DMB, DVB-SH, or other receivers designed for terrestrial use. This component determines the required correction by: comparing the received signal to an internal reference frequency and measuring the difference; or by computing the offset from knowledge of the satellite position along with aircraft velocity and position; or by simply searching for the correct signal or local oscillator frequency. Aircraft velocity and position can be determined from aircraft navigational inputs. The Doppler offset is typically implemented by offsetting the frequency of an oscillator in an up-converter or a down-converter. It can also be implemented by means of a digital spectrum shift in the case of sampled data. (Another alternative is to alter the receiver to deal with the variably Doppler offset frequency.) A fixed frequency offset of the internally re-broadcast signal relative to the signal received from the satellite can also be implemented by offset of an oscillator frequency in an up or down-converter or by means of digital spectral offset in a sampled signal.
(4) Repeater Electronics
   The minimum implementation of the repeater electronics is an amplifier that boosts the signal level to that required for reception inside the aircraft. This block may also incorporate any of the following additional functions: signal power level control; feedback cancellation; signal frequency offset; channel selection; source selection; content selection; signal multiplexing and switching; filtering; safety shutdown interface; signal monitoring and failure detection. The safety shutdown interface may be used to stop signal transmission inside the aircraft during take-off, landing or other critical periods.
(5) Antenna(s) on the inside of the Aircraft
   The interior antennas re-transmit the satellite tv signal, and/or other content, within the airframe. The airframe is a very severe propagation environment where blockage and multipath can result in signal loss or degradation. Antenna configurations that may minimize these effects are: leaky coax antenna along the length of the fuselage; one or more antennas located at the highest possible points within the fuselage such that body and seat blockage is minimized; multiple optimally located antennas; antennas in the seatbacks; or antennas in each seat.

### 2.2 Satellite to Terrestrial Format Conversion

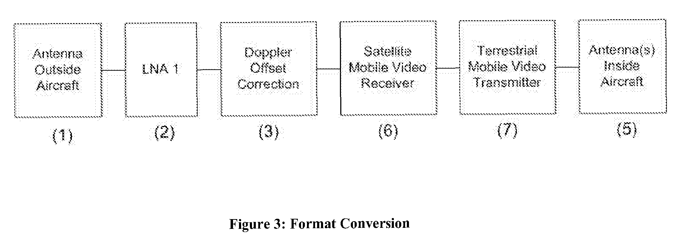

A second implementation of the invention involves reception of television signals broadcast from the satellite in one format followed by conversion of the signals into a new format, then re-transmission into the interior of the aircraft. This second implementation is shown in Figure 3.

In this configuration the Doppler Offset Correction (3) is followed by a Satellite Mobile Video Receiver (6) which recovers the audio and video or digital content of the signals received from the satellite. This receiver incorporates functions including, but not limited to, demodulation, decoding and de-interleaving. This may be a receiver designed for reception of satellite video broadcasts on the ground or in a ground-based vehicle. This receiver may have some modifications to make it suitable for use on an aircraft. This receiver may be a DVB-SH receiver and/or a S-DMB receiver. It may also be multiple receivers in order to increase the number of programs that are simultaneously received by the system. The output of the satellite receiver(s) is converted to a terrestrial broadcast video format by the Terrestrial Mobile Video Transmitter (7). This transmitter may transmit in DVB-H format and/or in T-DMB format and/or in other format suitable for reception, demodulation and decoding individually by users on the aircraft. The Transmitter (7) may be multiple transmitters if this is required to transmit additional content, additional channels, and/or additional formats. Other In Flight Entertainment (IFE) content, in addition to that received from the satellite, may also be broadcast into the airframe by the Transmitter(s) (7) and antennas (5). Selection and/or multiplexing of content can be performed within any of blocks (1), (2), (3), (5), (6) or (7).

### (6) Satellite Mobile Video Receiver

The Satellite Mobile Video Receiver recovers the, audio and video, and/or digital, content of the signals received from the satellite. This receiver incorporates functions including, but not limited to, demodulation, decoding and de-interleaving. This may be a receiver designed for reception of satellite video broadcasts on the ground or in a ground-based vehicle. This receiver may have some modifications to make it suitable for use on an aircraft. For example the extended Doppler Offset Correction (3) (that is, correction for Doppler larger than that normally incurred by terrestrial receivers) may be incorporated into this block rather than being implemented as a separate module. This receiver may be a DVB-SH receiver and/or a S-DMB receiver. It may also be multiple receivers in order to increase the number of programs that are simultaneously received by the system.

### (7) Terrestrial Mobile Video Transmitter

The Terrestrial Mobile Video Transmitter takes the recovered signals from the Satellite receiver and converts them to a terrestrial format for transmission into the interior of the airframe. The transmission may be in DVB-H format and/or in T-DMB format and/or in other format suitable for reception, demodulation and decoding individually by users on the aircraft. The Transmitter may be multiple transmitters if this is required to transmit additional content, additional channels, and/or additional formats. Other In Flight Entertainment (IFE) content, in addition to that received from the satellite, may also be broadcast into the airframe by the Transmitter(s). This other content may be multiplexed, using some means, with the satellite tv signal.

The interleaving of data transmitted into the interior of the airframe may be different from that of data received from the satellite. The rational for this difference is that the two multipath environments are radically different and consequently different interleaving is optimal for best BER performance. Modulation, multiplexing and coding of the signal transmitted within the airframe may also be different from that received from the satellite. For example, OFDM may be used inside the airframe to combat multipath whereas OFDM is not efficient over a satellite link due to the inefficient use of the satellite power amplifiers. OFDM has a high peak to average power ratio whereas satellite transponders are more efficient when a constant envelope modulation is used. The signal received from the satellite may, for example, use some form of time division multiplexing.

### 2.3 Steered Antenna Beam

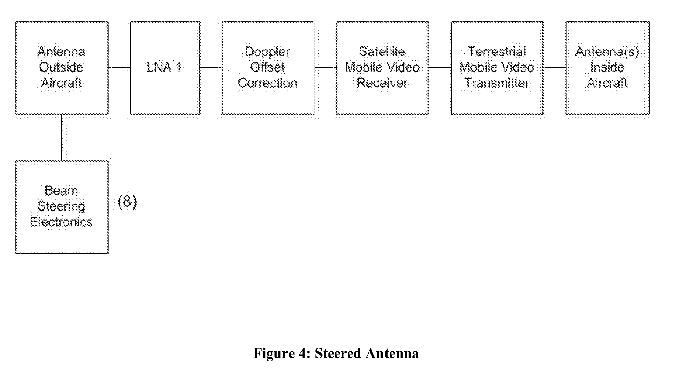

A third variant of the invention is shown in Figure 4. In this variant the Antenna Outside the Aircraft (1) is sufficiently directive that its beam must be steered towards the satellite from which the signals are received. The higher antenna gain can be useful in a variety of scenarios including: operation beyond the normal coverage region of the network; compensation for gain loss that may otherwise be incurred when the aircraft banks; operation when the power density incident on the aircraft is too low for operation with a non-steered, omni-directional, antenna; reception from global or large-regional satellite beams. Typically this steered-beam antenna would have lower gain than that required for conventional aeronautical satellite tv and the antenna would typically be smaller. The signal frequency received by this antenna would also typically be different, usually lower, than the Ku-band conventionally received by aeronautical satellite tv systems.

If the antenna is a phase-scanned array then the beam peak may be steered towards the satellite by control of phase shifters within the antenna or beam forming network. Alternatively the entire antenna, or radiating portion of the antenna, may be rotated using motors or actuators. Beam Steering Electronics (8) is required to control the phase shifters and/or motors and/or actuators. Antennas can also be devised which have a number of beams with the most desirable beam being selected at any given moment. Simple phased arrays can also be envisaged that may have as few as two or three receiving elements. The antenna may be low profile, barely protruding from the airframe, or may be incorporated under a raised radome. The antenna may also be located within the tail of the aircraft or within some portion of the wing or airframe where it may not be visible from the outside and may not impact aerodynamic performance.

### (8) Beam Steering Electronics

The Beam Steering Electronics provides the control signals required to direct the antenna beam towards the satellite of interest. The control signals would typically be pulses driving stepper motors, dc voltage driving dc motors, or bias voltages on phase shifters. Alternatively there may be some sort of data bus that sends digital control signals to drivers located closer to the motors and/or phase shifters. The Beam Steering Electronics may receive some feedback of the antenna orientation relative to the airframe. This may be provided by synchros, end-stop detectors, encoders or other means. The Beam Steering Electronics requires some means of determining what orientation the antenna beam must have relative to the airframe. This can be determined by any combination of the following means:
(1) Computation of the required angles from knowledge of the aircraft attitude, aircraft location, and satellite position. The aircraft location and attitude may be obtained from navigation equipment on the aircraft, such as an Inertial Navigation System, and/or derived from sensors within the electronics unit, and/or derived from sensors attached to the antenna. Such sensors may be rate sensors, compasses, gyros, accelerometers, micro-machines and/or other devices.
(2) Searching for the signal by scanning the antenna orientation.
(3) Tracking the satellite using dither or monopulse techniques.

## Claims

1. A repeater for digital satellite broadcasts wherein:
a. the repeater receives digital television signals broadcast from a satellite using one or more antennas mounted on the outside of an aircraft;
b. the repeater corrects for Doppler frequency offset, resulting from the aircraft and/or satellite motion, prior to re-transmission of the broadcast. This correction is a shift of the received signal frequency;
c. the repeater re-transmits the broadcast satellite tv programming, in a modulated and coded format, into the inside of an aircraft
d. the re-transmitted signal is received by multiple users inside the aircraft;
e. the repeated signal is in a modulated and/or coded form and consequently the multiple users of the signal must each have a receiver capable of performing the required demodulation and/or decoding.

2. A repeater as in claim 1 wherein the Doppler offset frequency is computed and/or corrected using information from aircraft navigational equipment and knowledge of the satellite orbit.

3. A repeater as in claim 1 wherein the Doppler offset frequency is determined and/or corrected using a comparison of the received signal frequency to that of a reference oscillator onboard the aircraft and/or by means of a search in the frequency domain.

4. A repeater as in claims 1, 2 or 3 wherein the re-transmission into the inside of the aircraft is by means of one or more antennas mounted inside the aircraft.

5. A repeater as in claims 1, 2 or 3 wherein the re-transmission into the inside of the aircraft is by means of wire and/or coaxial cable connections.

6. A repeater as in claim 1, 2 or 3 wherein the re-transmission into the inside of the aircraft is by means of optical fiber connections.

7. A repeater as in claims 4, 5 or 6 wherein the antenna, or antennas, on the outside of the aircraft has an omni-directional beam, or omni-directional beams, such that beam steering is not required. Diversity reception may or may not be incorporated.

8. A repeater as in claims 4, 5 or 6 wherein the antenna, or antennas, on the outside of the aircraft have directional patterns that must be steered towards the satellite, or satellites, of interest using electronic means.

9. A repeater as in claims 4, 5 or 6 wherein the antenna, or antennas, on the outside of the aircraft have directional patterns that must be steered towards the satellite, or satellites, of interest using mechanical means.

10. A repeater as in any of claims 1 through 9 wherein the repeater is part of a more comprehensive in-flight entertainment system and passengers, or pilots, may select information or video from the repeated satellite tv source and/or other sources which may include recorded movies, centrally decoded satellite video or audio, internet services, telephone services, or other services.

11. A repeater as in claim 10 wherein signals from sources other than the said one or more antennas mounted on the outside of an aircraft are also broadcast inside the aircraft. These other sources may be from other satellite reception equipment, playback of local recordings, terrestrial receptions or any other source. Either a common carrier or separate carriers may be used. The signals may be simultaneous, multiplexed in any way, or the system may re-broadcast one source at a time.

12. A repeater as in claims 8, 9, 10 or 11 wherein the repeater receives commands from other aircraft systems which restrict its operation when such operation is deemed to be unsafe, and/or undesirable, and/or unnecessary.

13. A repeater as in claims 8, 9, 10, 11 or 12 wherein some broadcasts received from the satellite are re-broadcast into the aircraft and others are not. The selection may be preprogrammed, indicated by some content of the broadcast, selected locally by manual or automatic means, or by some other mechanism.

14. A repeater as in any of claims 1 through 13 wherein the signal re-broadcast into the interior of the aircraft is the same as that received from the satellite except for the Doppler frequency correction.

15. A repeater as in any of claims 1 through 14 which receives signals received in both DVB-SH and S-DMB format. These two formats can either be received simultaneously or one at a time.

16. A repeater as in any of claims 1 through 14 which receives signals in either DVB-SH or S-DMB formats.

17. A repeater as in any of claims 1 through 16 wherein the signals re-broadcast into the interior of the aircraft are in DVB-H and/or T-DMB format.

18. A repeater as in any of 1) through 17) wherein the aircraft velocity relative to the satellite, for which the repeater compensates the Doppler offset, ranges from 0km/hr to at least +/-650km/hr

19. A repeater as in any of claims 1 through 18 wherein the signal received from the satellite has a longer interleaver than that re-transmitted into the inside of the aircraft.

20. A repeater as in any of claims 1 through 19 wherein the signal re-transmitted into the inside of the aircraft has different modulation than that received from the satellite.

21. A repeater as in any of claims 1 through 20 wherein the signal re-transmitted into the inside of the aircraft has a format designed for transmission from towers on the ground in a terrestrial network while the signal received from the satellite has a different format optimized for use over satellite links. For example the signal re-broadcast inside the airframe may have a OFDM format while the signal received from the satellite may be TDM.

22. A repeater as in any of claims 1 through 21 wherein the signal re-transmitted into the interior of the aircraft is offset in frequency by a fixed amount from that transmitted by the satellite.

23. A system wherein S-DMB and/or DVB-SH signals are transmitted over global coverage satellite beams at a lower power density than that required for reception by hand-held devices on the ground.

24. A repeater designed to receive signals from a system as in claim 23 and re-transmit or distribute these signals in some manner within an aircraft. The format and/or content of the signals may be changed prior to re-transmission or distribution.

25. Receiving apparatus for reception of S-DMB and/or DVB-SH signals wherein these signals have lower power density than can be received and demodulated using omni-directional antennas. This apparatus incorporating higher gain antennas wherein the antenna beam must be directed by some means towards the satellite.

26. A receiving apparatus as in claim 25 wherein the antenna beam is steered by mechanically rotating a directive antenna using motors. Wherein the motors are controlled by beam steering electronics.

27. A receiving apparatus as in claim 25 wherein the antenna beam is steered by means of phase shifters without the need for mechanical motion of the antenna. Wherein the phase shifters are controlled by beam steering electronics.

28. A system as in any of claims 1 through 27 wherein the multiple users can also transmit to the repeater.

29. A system as in claim 28 wherein information transmitted to the repeater, by the multiple users, is relayed into the terrestrial internet and/or cellular telephone network.

30. A system as in claim 29 wherein the information relayed to the terrestrial internet and/or cellular telephone network is relayed by means of a data link from the aircraft to a satellite then from the satellite to the terrestrial network.

31. A system as in any of claims 1 through 30 wherein the repeater also supports unicast services intended for reception by a single user or sub-set of the users on the aircraft

32. A system as in any of claims 1 through 31 wherein the repeater supports bi-directional internet and/or bi-directional voice service to the multiple users.
